(19) Europäisches Patentamt / European Patent Office / Office européen des brevets

(11) **EP 3 616 526 B1**

(12) **EUROPEAN PATENT SPECIFICATION**

(45) Date of publication and mention of the grant of the patent:
**12.11.2025 Bulletin 2025/46**

(21) Application number: **18791230.8**

(22) Date of filing: **24.04.2018**

(51) International Patent Classification (IPC):
**A23C 19/082** (2006.01)    **A23C 19/08** (2006.01)

(52) Cooperative Patent Classification (CPC):
**A23C 19/082**

(86) International application number:
**PCT/JP2018/016528**

(87) International publication number:
**WO 2018/199054 (01.11.2018 Gazette 2018/44)**

(54) **METHOD FOR MANUFACTURING PROCESSED CHEESE**

VERFAHREN ZUR HERSTELLUNG VON SCHMELZKÄSE

PROCÉDÉ DE FABRICATION DE FROMAGE FONDU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.04.2017 JP 2017085265**

(43) Date of publication of application:
**04.03.2020 Bulletin 2020/10**

(73) Proprietor: **Nihon Shokuhin Kako Co., Ltd.**
**Tokyo 100-7012 (JP)**

(72) Inventors:
• **ONO Eriko**
**Fuji-shi**
**Shizuoka 417-8530 (JP)**
• **TAKAGUCHI Hitoshi**
**Fuji-shi**
**Shizuoka 417-8530 (JP)**

• **IGARASHI Nobuhito**
**Fuji-shi**
**Shizuoka 417-8530 (JP)**

(74) Representative: **ABG Intellectual Property Law, S.L.**
**Avenida de Burgos, 16D**
**Edificio Euromor**
**28036 Madrid (ES)**

(56) References cited:
JP-A- 2009 050 263     JP-A- 2011 152 103
JP-A- 2011 152 103     JP-A- 2012 005 435
JP-A- 2012 005 435     JP-A- 2013 017 403
JP-A- 2013 017 403     JP-A- H06 237 719
JP-A- H06 237 719     JP-A- H07 250 641
JP-A- H07 250 641     JP-B1- 6 222 788
US-A1- 2009 061 065

## Description

TECHNICAL FIELD

The present invention relates to a method for manufacturing a processed cheese.

BACKGROUND ART

A processed cheese can be manufactured by heat-melting a natural cheese, adding an emulsifier and the like, and forming the mixture again. Therefore, the processed cheese has a characteristic of formability into the desired shape and also a characteristic of a stable flavor and possible long-term storage since lactic acid bacteria are killed by heating. On the other hand, the processed cheese contains a raw material natural cheese, and thus the price thereof is affected by the price of the natural cheese. Therefore, one option to reduce the cost of the processed cheese is to reduce the amount of the natural cheese to be blended.

As processed cheeses having a reduced amount of a natural cheese to be blended, those having a processed starch added thereto are known so far. For example, Patent Document 1 describes a processed cheese containing an oxidized starch and a flavor substance and having good flavor exhibiting property. Patent Document 2 describes a method for manufacturing a cheese having freezing resistance and frying resistance, comprising adding and mixing a molten salt and one or more starches selected from an oxidized starch, an esterified starch and an etherified starch to/with a natural cheese, and heat-melting the mixture by a conventional method for emulsification thereof. Patent Document 3 describes a processed cheese product obtained by cooking while stirring a blend of casein protein source, a fat source, an emulsified salt composition, an acid modified starch, as distarch phosphate, an emulsifying starch and water.

Reference List

Patent Document

Patent Document 1: JP 2012-5435 A
Patent Document 2: JP H6-153791 A
Patent Document 3: US 2009/061065 A1

SUMMARY OF THE INVENTION

However, in processed cheeses containing a processed starch, which have been proposed so far, the processed starch is not used as a substitutive material for a natural cheese. Therefore, such processed cheeses have not been developed, focusing on the improvement in their shape retention and texture when the natural cheese is substituted by the processed starch.

An object of the present invention is to provide a method for manufacturing a processed cheese having excellent shape retention and texture even when a raw material natural cheese is partially substituted by other food materials.

The present inventors have found that a processed cheese having excellent shape retention and texture can be obtained if a raw material natural cheese is partially substituted by a crosslinked starch and a low molecular weight starch as defined in the method of claim 1. The present invention is based on this finding.

The present invention is set out in the appended set of claims.

According to the present invention, a processed cheese having excellent shape retention and texture can be manufactured by partially substituting a raw material natural cheese by a crosslinked starch and an oxidized starch having predetermined physical properties as defined in the method of claim 1.

DETAILED DESCRIPTION OF THE INVENTION

The term "processed cheese" as used herein is intended to mean those conforming to any of the standards for processed cheeses, cheese foods and foods containing milk or a milk product as the main raw material prescribed in the Ministerial Ordinance Concerning Compositional Standards, etc. for Milk and Milk Products (Ministry of Health and Welfare Ordinance No. 52, December 27, 1951) and the Fair Competition Code, as well as those generally identified as "processed cheeses" or "processed cheese-like foods."

In the present invention, natural cheeses usable as the raw material for processed cheeses are: fresh cheeses such as cream cheese, mozzarella cheese, ricotta cheese, mascarpone cheese and Fromage blanc; bloomy rind cheeses such as Camembert cheese and Brie cheese; blue cheeses such as Gorgonzola, Stilton and Roquefort; washed rind cheeses such as Livarot; semi-hard cheeses such as provolone and Gouda; and hard cheeses such as Grana, Emmental and Cheddar, and are not particularly limited so long as they are commonly used in the manufacture of processed cheeses. The kind and degree of maturity of the raw material natural cheese are not particularly limited so long as it is designed and formulated so as to provide the physical properties, flavor and the like required of the finally-obtained processed cheese. Also, a mixture of two or more kinds of natural cheeses may be used as the raw material cheese.

The processed cheese manufactured by the manufacture method according to the present invention is such that a raw material natural cheese has partially been substituted by other food materials. The phrase "a natural cheese has partially been substituted by other food materials" means that a natural cheese has partially been substituted by food materials other than the natural cheese. Specifically, the processed cheese manufactured by the manufacture method of the present invention has a reduced amount of a natural cheese to be blended, and includes those having the natural cheese content of 20% or more and less than 100%.

In the manufacture method of the present invention, the processed cheese to be manufactured is such that a raw material natural cheese has partially been substituted by a crosslinked starch and a low molecular weight starch as defined in claim 1.

The crosslinked starch usable in the method of the present invention can be prepared by subjecting a starch to crosslinking treatment using a crosslinking agent known in the food processing field.

Examples of the crosslinking treatment include phosphoric acid crosslinking treatment using sodium trimetaphosphate or phosphoryl chloride, adipic acid crosslinking treatment using adipic acid together with acetic anhydride, acrolein crosslinking treatment using acrolein, and epichlorohydrin crosslinking treatment using epichlorohydrin. The amount of the crosslinking agent to be added and the reaction conditions for the crosslinking treatment (for example, reaction time, reaction temperature and reaction pH) can be appropriately adjusted to control the crosslinking reaction so as to achieve the desired crosslinking degree. The crosslinking degree is well correlated with the heat swelling degree of the starch. Specifically, the crosslinking degree can be increased to suppress the swelling of the starch, thereby suppressing the heat swelling degree. Thus, the amount of the crosslinking agent to be added and the reaction conditions such as the reaction time, the reaction temperature and the reaction pH can be appropriately adjusted to adjust the heat swelling degree to the desired level. The crosslinked starch used in the method of the present invention has a heat swelling degree preferably ranging from 7.0 times to 70.0 times, more preferably ranging from 10.0 times to 60.0 times, from the viewpoint of improving the shape retention and elasticity of the manufactured processed cheese better.

The heat swelling degree value decreases in the case where a binding form is introduced into the starch molecule through treatment with a crosslinking agent such as sodium trimetaphosphate or phospholyl chloride. On the other hand, the value increases in the case where the molecular weight reduction of the starch molecule proceeds through treatment with an aqueous sodium hypochlorite solution, a saccharogenic enzyme, an acid or the like. Thus, such treatment may be appropriately carried out according to a method well known to those skilled in the art to adjust the heat swelling degree.

The heat swelling degree of the crosslinked starch can be measured through the procedures which will be described in the Examples.

In the method of the present invention, the blending ratio of the crosslinked starch (solid content mass) to the total raw material (including moisture contained in the raw materials) at the time of blending the raw materials is defined as 1.8% to 5.3% by mass (preferably, 1.8% to 3.5% by mass), from the viewpoint of improving the workability in manufacture and also improving the shape retention and texture of the processed cheese.

The low molecular weight starch usable in the method of the present invention can be prepared by any method so long as it has predetermined viscosity and DE, and, for example, can be prepared by subjecting a starch to known oxidation treatment.

Examples of molecular weight reduction treatment include acid treatment (not encompassed by the invention), enzyme treatment (not encompassed by the invention) and oxidation treatment (according to the invention). The acid-treated starch is a starch obtained by treatment of a raw material starch with an acid. Examples of the acid usable in the acid treatment include inorganic acids such as sulfuric acid, hydrochloric acid and phosphoric acid and organic acids such as acetic acid. Also, the enzyme-decomposed starch is a starch obtained by treatment of a raw material starch with an amylolytic enzyme, and can be obtained, for example, by suspending a raw material starch in water, adjusting the pH to 4 to 6, adding an amylolytic enzyme to cause a reaction at 40°C, and subjecting the reaction product to water washing/filtration and drying. Examples of the enzyme usable in the enzyme decomposition treatment include $\alpha$-amylases, $\beta$-amylases and debranching enzymes. Also, the oxidized starch is a starch obtained by treatment of a raw material starch with an oxidant. Examples of the oxidant usable in the oxidation treatment include sodium hypochlorite, calcium hypochlorite, bleaching powder, hydrogen peroxide, potassium permanganate, peracetic acid and nitric acid.

The low molecular weight starch used in the method of the present invention is an oxidized starch, preferably an acetylated oxidized starch obtained by acetylation treatment of an oxidized starch, from the viewpoint of improving the elasticity and smoothness of the manufactured processed cheese better.

As the low molecular weight starch used in the method of the present invention, one having a predetermined value of DE (Dextrose Equivalent) is employed. DE is a value of the percentage of reducing sugars in a sample, expressed in terms of glucose, relative to the solid contents. The DE is an index for the degree of decomposition of a starch decomposition product, and a higher DE value can be said to mean that the starch is decomposed and reduced in molecular weight more. As the low molecular weight starch used in the method of the present invention, one having a DE of less than 2, preferably a DE of less than 1, more preferably a DE of less than 0.5 is used. The DE of the low molecular weight starch can be adjusted within the numerical range indicated above, thereby further improving the smoothness of the manufactured processed cheese.

The DE of the low molecular weight starch can be measured by the "modified Somogyi method" or the like, and, specifically, can be measured through the procedures described in the Examples.

As the low molecular weight starch used in the method of the present invention, one having a predetermined value of paste viscosity at 10% by mass is used. The paste viscosity at 10% by mass of the low molecular weight starch is a value representing the degree of decomposition of the starch, and a lower value thereof can be said to mean that the starch is decomposed and reduced in molecular weight more. The low molecular weight starch usable in the method of the present invention has a paste viscosity at 10% by mass of 300 mPa·s or less, preferably less than 200 mPa·s, more preferably less than 50 mPa·s. The paste viscosity at 10% by mass of the low molecular weight starch can be adjusted within the numerical range indicated above, thereby further improving the workability in manufacture.

The paste viscosity at 10% by mass of the low molecular weight starch can be measured through the procedures described in the Examples.

The low molecular weight starch usable in the method of the present invention has a DE of less than 2 and a paste viscosity at 10% by mass of 300 mPa·s or less, preferably a DE of less than 1 and a paste viscosity at 10% by mass of less than 200 mPa·s, more preferably a DE of less than 0.5 and a paste viscosity at 10% by mass of less than 50 mPa·s.

In the method of the present invention, the blending ratio of the low molecular weight starch (solid content mass) to the total raw material (including moisture contained in the raw materials) at the time of blending the raw materials is defined as 2.6% to 14.9% by mass (preferably, 5.3% to 14.9% by mass, more preferably 5.3% to 13.1% by mass), from the viewpoint of improving the shape retention and texture of the processed cheese.

Any starch that can be utilized in foods can be used as the starches which serve as the raw materials for the crosslinked starch used in the present invention. Examples of such usable starches include corn starch, tapioca, rice starch, wheat starch, potato starch, sweet potato starch, mung bean starch, dogtooth violet starch, arrowroot starch, bracken starch , sago starch and Ooubayuri (*Cardiocrinum cardatum var. glehnii*) starch. Among these starches, waxy corn starch and tapioca are used as the raw material starches for the low molecular weight starch and are preferred from the viewpoint of the cost, general-purpose properties and effect. For all the starches, not only normal starches, but also those improved by thremmatological or gene-engineering techniques, such as nonglutinous species, waxy species and high amylose species, may be used.

In addition to the crosslinking treatment or molecular weight reduction treatment, any other processing treatment may be further applied to the starches used in the present invention. Examples of allowable processing treatment include processing treatment known in the food processing field, such as esterification, etherification, oxidation, oil and fat processing, crosslinking treatment, ball mill treatment, pulverization treatment, heating treatment, warm water treatment, bleaching treatment, acid treatment, alkali treatment, enzyme treatment and pregelatinization.

The manufacture method of the present invention can be carried out according to a normal method for manufacturing a processed cheese, except blending the crosslinked starch and the low molecular weight starch. Specifically, in the method of the present invention, a processed cheese in which a natural cheese has partially been substituted by other food materials can be manufactured by carrying out the step of blending a raw material cheese, a crosslinked starch, a low molecular weight starch and other auxiliary raw materials, the step of heating and stirring the blended ingredients, and the cooling step of cooling the heated and stirred ingredients. After the blending step, the step of mixing the ingredients may be carried out. Also, the timing to add the crosslinked starch and the low molecular weight starch to the other ingredients is not particularly limited. The crosslinked starch and the low molecular weight starch may be added simultaneously, or either one of the starches may be added first and the other may be added later. The heating and stirring step is intended to emulsify the blended ingredients, and heating and stirring can be carried out according to normal conditions for manufacturing a processed cheese.

In the method of the present invention, milk raw materials other than natural cheeses and processed cheeses and additives which are commonly used in the cheese manufacture and are allowable as foods, such as molten salts, stabilizers, pH adjusters and seasonings can be used as auxiliary raw materials. Examples of such auxiliary raw materials include dairy products such as butter, butter oil, cream, cream powder, butter, butter milk, caw milk, concentrated milk, skim milk powder, whey (including whey powder), milk protein concentrates, whey protein concentrates (WPC), whey protein isolates (WPI) and lactose, milk ingredients, vegetable fats, and food additives such as molten salts, stabilizers, gelling agents, thickeners, pH adjusters and seasonings (such as table salt, sodium glutamate and sodium inosinate).

Also, in the method of the present invention, foods and/or food additives other than those listed above may be blended as the auxiliary raw materials, according to need, in order to adjust the emulsification and/or physical properties of the processed cheese of the present invention. Examples of such foods and food additives include starches, processed starches (except crosslinked starches and low molecular weight starches), dextrin, egg white, egg white powder, gelatin, agar, polysaccharide thickeners (such as locust bean gum, guar gum, carrageenan, xanthan gum, gum tragacanth, tamarind seed gum, pectin, gum arabic, curdlan, tara gum, gellan gum, gum ghatti, CMC, sodium alginate and pullulan), casein, sodium caseinate, soybean protein, gluten, and cellulose. These foods and food additives for adjusting the emulsification and/or physical properties can be used singly, or two or more kinds thereof may be used in combination.

In the method of the present invention, a food material not derived from milk can further be blended as the auxiliary raw material, according to need, in order to impart the fragrance or taste to the processed cheese of the present invention. Examples of such a food material include fruits, fruit juices, nuts (for example, walnut and almond), herbs (for example, basil), spices (for example, pepper), syrups (for example, maple syrup and honey) and processed products thereof (for example, orange peels, fruit jam, and dried fruits), vegetables and processed products thereof (for example, takana (leaf mustard) pickles), processed meat products (for example, salami sausages and bacon chips), processed marine products (for example, cod roe and salmon), and food additives such as flavors, sweeteners, seasonings and flavoring substances.

According to the method of the present invention, a processed cheese having excellent shape retention and/or texture can be manufactured despite the fact that a natural cheese, which is a raw material for the processed cheese, has partially been substituted by a crosslinked starch and a low molecular weight starch. Here, the term "texture" is used to mean elasticity, hardness and smoothness at the time of eating. The method of the present invention is advantageous also in that a natural cheese can be partially substituted by a crosslinked starch and a low molecular weight starch without deteriorating the workability in manufacture.

The method of the present invention can be used for suppressing the deterioration in shape retention and/or texture of the processed cheese. Here, the phrase "suppressing the deterioration in shape retention and/or texture" means providing shape retention and texture almost equivalent to or higher than the shape retention and texture of a normal processed cheese in which a part of a natural cheese has not been substituted by any other food material. The method for improving the shape retention and the texture according to the present invention can be carried out according to the descriptions about the manufacture method of the present invention.

EXAMPLES

Hereinafter, the present invention will be described in more detail by way of the following examples, but is not limited thereto. It should be noted that the unit "%" in the following examples means "% by mass (W/W %)," unless otherwise specified.

Measurement of heat swelling degree

The heat swelling degree of sample starches can be measured in the following manner. Specifically, 0.2 g of a sample starch (moisture content: 12.5%) was dispersed in 19.8 mL of water, and the solution was heated for 30 minutes while being sometimes stirred in boiling water, and then cooled to 30°C. Then, this paste liquid was centrifuged ($2,055 \times G$, 10 min.) to separate it into a paste layer and a supernatant liquid layer. The mass of the paste layer was measured and defined as c. Further, the paste layer subjected to mass measurement was dried and hardened at 105°C, and then the mass of the resultant dried solid product was measured and defined as d. The c/d value was defined as the heat swelling degree (times). When the paste layer and the supernatant liquid layer were not separated from each other, the swelling degree of the starch was evaluated to be "quite high."

Measurement of DE

The DE of sample starches was measured by the "modified Somogyi method." Firstly, a sample starch was dispersed in distilled water to prepare a 10% by mass of a slurry or aqueous solution in terms of solid content. Then, the sample starch was solubilized using an autoclave. Then, a Brix meter (manufactured by ATAGO CO., LTD.) was used to measure the Brix of the sample starch solution. Into a flask or the like, 0.5 mL of this sample starch solution was transferred. The mass of the transferred sample starch paste liquid was accurately weighed, and then 19.5 mL of distilled water and 10 mL of the following liquid A were added so that the total amount reached 30 mL. This solution was heated, and boiling was maintained for 3 minutes. Thereafter, the solution was cooled, and 10 mL of the following liquid B was added thereto. Then, the following liquid C was added, and the solution was shaken quickly. This was subjected to titration with an aqueous solution of 0.05 N sodium thiosulfate, and the DE was calculated based on the following formula. The titration was ended at the time when the solution turned blue by addition of a 1% starch indicator. A product obtained by replacing the sample starch solution with water was used as a blank.

Liquid A: prepared by dissolving 90 g of potassium sodium tartrate and 225 g of trisodium phosphate-dodecahydrate in 500 mL of distilled water, adding a solution obtained by dissolving 30 g of copper sulfate in 100 mL of distilled water to this solution while fully stirring it, further adding a solution obtained by adding 3.5 g of potassium iodate to a small amount of distilled water to this solution so that the total amount reached 1000 mL, and then filtering the solution.

Liquid B: prepared by dissolving 30 g of potassium oxalate and 40 g of potassium iodide in water so that the total amount reached 1000 mL.

Liquid C: prepared by diluting 56 mL of concentrated sulfuric acid with distilled water to 1000 mL in a measuring flask.

$$DE = [\{1.449 \times (a2-b2) \times f2\}/(Bx \times w2)] \times (1/1000) \times 100$$

a2: amount (mL) of oxidized starch titrated
b2: amount (mL) of blank titrated
f2: titer (mg/mL) of aqueous solution of 0.05N sodium thiosulfate
Bx: Brix of low molecular weight starch solution
w2: mass (g) of low molecular weight starch solution

Measurement of paste viscosity

The paste viscosity at 10% by mass of sample starches was measured using a paste viscosity measurement device (Rapid Visco Analyser: RVA, Model RVA-4 manufactured by Newport Scientific, Inc.) in the following manner. Specifically, 3.0 g of a sample starch in terms of solid content was placed in an aluminum can, and purified water was added so that the total amount reached 30 g (10% by mass). Then, a paddle was set to measure the viscosity under the conditions indicated in the following Table 1. The maximum viscosity in the viscosity data obtained at the time of rotation at 160 rpm was defined as the paste viscosity at 10% by mass.

[Table 1]

|  | Measurement time (min·sec) | | | | | | | | | | |
|---|---|---|---|---|---|---|---|---|---|---|---|
|  | 0:00 Start | 0:10 | 1:00 | - | 4:42 | - | 7: 12 | - | 11:00 | - | 13:00 End |
| Temperature (°C) | 50 | 50 | 50 | raised | 95 | 95 | 95 | cooled | 50 | 50 | 50 |
| Paddle rotation number (rpm) | 960 | 160 | 160 | 160 | 160 | 160 | 160 | 160 | 160 | 160 | 160 |

Preparation of crosslinked starch

· Crosslinked starch 1

"MAPS #306" manufactured by NIHON SHOKUHIN KAKO CO., LTD. was used as crosslinked starch 1.

· Crosslinked starch 2

"MT-50" manufactured by NIHON SHOKUHIN KAKO CO., LTD. was used as crosslinked starch 2.

· Crosslinked starch 3

"NEOVIS C-10" manufactured by NIHON SHOKUHIN KAKO CO., LTD. was used as crosslinked starch 3.

· Crosslinked starch 4

"NEOVIS C-6" manufactured by NIHON SHOKUHIN KAKO CO., LTD. was used as crosslinked starch 4.

· Crosslinked starch 5

"NEOVIS T-100" manufactured by NIHON SHOKUHIN KAKO CO., LTD. was used as crosslinked starch 5.

· Crosslinked starch 6

"CLEARTEXT B-3" manufactured by NIHON SHOKUHIN KAKO CO., LTD. was used as crosslinked starch 6.

· Crosslinked starch 7

To an aqueous solution obtained by dissolving 20 parts of sodium sulfate in 100 parts of water, 100 parts of tapioca was added to form a slurry. To the slurry, 30 parts of a 4% aqueous caustic soda solution, 5 parts of propylene oxide and 0.4 parts of sodium trimetaphosphate were added while being stirred to cause a reaction at 41°C for 20 hours, followed by neutralization with sulfuric acid, water washing and dehydration. The resultant product was dried to obtain crosslinked starch 7.

The characteristics of the prepared crosslinked starches are as indicated in Table 2.

[Table 2]

| Table 2: Characteristics of crosslinked starch | | | |
|---|---|---|---|
| Sample No. | Raw material | Starch structure | Heat swelling degree |
| Crosslinked starch 1 | Waxy corn starch | Acetylated adipic acid crosslinked starch | 23.9 |
| Crosslinked starch 2 | Tapioca | Acetylated adipic acid crosslinked starch | 37.7 |
| Crosslinked starch 3 | Waxy corn starch | Phosphoric acid crosslinked starch | 22.0 |
| Crosslinked starch 4 | Waxy corn starch | Phosphoric acid crosslinked starch | 16.4 |
| Crosslinked starch 5 | Tapioca | Phosphoric acid crosslinked starch | 12.0 |
| Crosslinked starch 6 | Tapioca | Hydroxypropylated phosphoric acid crosslinked starch | 58.2 |
| Crosslinked starch 7 | Tapioca | Hydroxypropylated phosphoric acid crosslinked starch | 25.7 |

Preparation of low molecular weight starch

· Low molecular weight starch 1

"TSK-13" manufactured by NIHON SHOKUHIN KAKO CO., LTD. was used as low molecular weight starch 1.

· Low molecular weight starch 2

To 120 parts by mass of water, 100 parts by mass of tapioca was added to form a slurry. To the slurry, 0.5 parts by mass of sulfuric acid was added to cause a reaction at 40°C for 2 hours. Next, a 3% aqueous caustic soda solution was added to adjust the pH to 7, followed by water washing, dehydration and drying to obtain low molecular weight starch 2.

· Low molecular weight starch 3

To 120 parts by mass of water, 100 parts by mass of tapioca was added to form a slurry. To the slurry, a 3% aqueous caustic soda solution was added under stirring. While this solution was retained at a pH of 7, 20 parts by mass of an aqueous sodium hypochlorite solution (effective chlorine concentration: 12%) was added to cause a reaction at 35°C for 2 hours. Then, water washing, dehydration and drying were carried out to obtain low molecular weight starch 3.

· Low molecular weight starch 4

To 120 parts by mass of water, 100 parts by mass of corn starch was added to form a slurry. To the slurry, a 3% aqueous caustic soda solution was added under stirring. While this solution was retained at a pH of 7, 25 parts by mass of an aqueous sodium hypochlorite solution (effective chlorine concentration: 12%) was added to cause a reaction at 35°C for 2 hours. Then, water washing, dehydration and drying were carried out to obtain low molecular weight starch 4.

· Low molecular weight starch 5

To 120 parts by mass of water, 100 parts by mass of tapioca was added to form a slurry. To the slurry, 3.5 parts by mass of sulfuric acid was added to cause a reaction at 50°C for 2 hours. Next, a 3% aqueous caustic soda solution was added to adjust the pH to 7, followed by water washing, dehydration and drying to obtain low molecular weight starch 5.

· Low molecular weight starch 6

Low molecular weight starch 6 was obtained in a similar manner as low molecular weight starch 5 except that tapioca was replaced with waxy corn starch in the preparation of low molecular weight starch 5.

· Low molecular weight starch 7

Low molecular weight starch 7 was obtained in a similar manner as low molecular weight starch 5 except that tapioca was replaced with corn starch in the preparation of low molecular weight starch 5.

· Low molecular weight starch 8

Low molecular weight starch 8 was obtained in a similar manner as low molecular weight starch 4 except that corn starch was replaced with waxy corn starch in the preparation of low molecular weight starch 4.

· Low molecular weight starch 9

Low molecular weight starch 9 was obtained in a similar manner as low molecular weight starch 4 except that corn starch was replaced with tapioca in the preparation of low molecular weight starch 4.

· Low molecular weight starch 10

"CLUSTER DEXTRIN" manufactured by NIHON SHOKUHIN KAKO CO., LTD. was used as low molecular weight starch 10.

· Low molecular weight starch 11

To 350 parts by mass of water, 100 parts by mass of corn starch was added to form a slurry. A 3% aqueous caustic soda solution was added to the slurry to adjust the pH to 4 to 6. An amylolytic enzyme was added, and the solution was heated to form a paste liquid. The amylolytic enzyme was further added to cause a reaction at about 40°C until the DE reached 4 to 5. Filtration, ion purification and drying were carried out to obtain low molecular weight starch 11.

· Low molecular weight starch 12

Low molecular weight starch 12 was obtained in a similar manner as low molecular weight starch 11 except that corn starch was replaced with waxy corn starch and that the DE at the reaction end point was 10 to 12 in the preparation of low molecular weight starch 11.
The characteristics of the prepared low molecular weight starches are as indicated in Table 3.

[Table 3]

| Characteristics of low molecular weight starch | | | | |
|---|---|---|---|---|
| Sample No. | Raw material | Starch structure | DE | Viscosity (mPa·s) |
| Low molecular weight starch 1 | Tapioca | Acetylated oxidized starch | 0.4 | 15 |
| Low molecular weight starch 2 | Tapioca | Acid-treated starch | 0.0 | 950 |
| Low molecular weight starch 3 | Tapioca | Oxidized starch | 0.1 | 452 |
| Low molecular weight starch 4 | Corn starch | Oxidized starch | 0.1 | 183 |
| Low molecular weight starch 5 | Tapioca | Acid-treated starch | 0.0 | 158 |
| Low molecular weight starch 6 | Waxy corn starch | Acid-treated starch | 0.0 | 82 |
| Low molecular weight starch 7 | Corn starch | Acid-treated starch | 0.1 | 37 |
| Low molecular weight starch 8 | Waxy corn starch | Oxidized starch | 0.2 | 24 |

(continued)

| Characteristics of low molecular weight starch | | | | |
| --- | --- | --- | --- | --- |
| Sample No. | Raw material | Starch structure | DE | Viscosity (mPa·s) |
| Low molecular weight starch 9 | Tapioca | Oxidized starch | 0.2 | 13 |
| Low molecular weight starch 10 | Waxy corn starch | Dextrin | 3.0 | 0 |
| Low molecular weight starch 11 | Corn starch | Dextrin | 4.6 | 0 |
| Low molecular weight starch 12 | Waxy corn starch | Dextrin | 11.1 | 0 |

Example 1: Manufacture and evaluation of processed cheese (1)

Ninety seven (97) parts of Gouda cheese and 3 parts of a molten salt were heated and stirred at 85°C for 2 minutes. A cup was filled with 50 g of the cheese whose heating yield reached 90%, and packed using a sealer. It was cooled in a refrigerator at 5°C for 48 hours to obtain a processed cheese (Experimental Section 1).

In 17 parts of water, 5 parts of whole milk powder was dissolved. In a pot, 22 parts of an aqueous solution of the dissolved whole milk powder, predetermined amounts of starches (parts by mass of the starches in Experimental Sections 2 to 25 indicated in Table 4), 45 parts of Gouda cheese and 1.7 parts of a molten salt were mixed in advance. Further, water was added to the mixture so that the total amount reached 100 parts, and the mixture was heated and stirred at 85°C for 2 minutes. A cup was filled with 50 g of the cheese whose heating yield reached 87%, and packed using the sealer. It was cooled in a refrigerator at 5°C for 48 hours to obtain a processed cheese (Experimental Sections 2 to 25).

For the processed cheeses obtained, the workability in manufacture and their shape retention and texture were evaluated. The evaluation was made according to the following evaluation criteria with a starch-free experimental section as a control for each of the cheeses.

<Workability in manufacture>

With the control as 5 points, the difference in workability from the control due to the difference in viscosity when each of the cheeses was heated and stirred was evaluated based on a 5-point scale. A cheese having an appropriate viscosity so that the materials could be readily mixed, resulting in higher workability scored higher, and a cheese having too high a viscosity, resulting in difficulty in stirring or having too low a viscosity, resulting in lower material mixing efficiency and lower workability scored lower.

<Shape retainability of cheese>

When the cheeses with which the cup was filled were cut and stored under refrigeration for one day, those which maintained the same shape as that of the control cut similarly were ranked as A, and those which did not maintained the same shape and were out of shape were ranked as B.

<Texture of cheese>

For the texture of the cheeses after refrigerated storage for four days after manufacture thereof, the elasticity, hardness and smoothness were evaluated based on a 10-point scale with the control as 5 points. For the elasticity, a cheese having higher elasticity scored higher. For the hardness, a chewier cheese scored higher. For the smoothness, a cheese free from a rough feel and giving a smooth feel on the tongue scored high, and a cheese giving a strongly rough feel scored low.

<Total>

Those in which the shape retention of the cheese was ranked as B or any of the workability in manufacture, the elasticity, the hardness and the smoothness scored 2 points or lower were ranked as B, and the others were ranked as A.

The results were as indicated in Table 4.

[Table 4]

| Table 4: Formulation and evaluation result of processed cheese | | | | | | | | | | | |
|---|---|---|---|---|---|---|---|---|---|---|---|
| Experimental Section | Crosslinked starch | | Low molecular weight starch | | Cheese | | Workability | Shape retention | Elasticity | Hardness | Smoothness | Total |
| | Kind | Content (parts)* | Kind | Content (parts)* | Kind | Content (parts)* | | | | | | |
| 1ª | - | - | - | - | Gouda | 97 | 5 | A | 5 | 5 | 5 | A |
| 2ª | Crosslinked starch 1 | 1 (0.9) | Low molecular weight starch 1 | 3 (2.6) | Gouda | 45 | 2 | B | 1 | 1 | 8 | B |
| 3ª | Crosslinked starch 1 | 2 (1.8) | Low molecular weight starch 1 | 2 (1.8) | Gouda | 45 | 2 | B | 2 | 3 | 7 | B |
| 4 | Crosslinked starch 1 | 2 (1.8) | Low molecular weight starch 1 | 3 (2.6) | Gouda | 45 | 4 | A | 3 | 4 | 7 | A |
| 5 | Crosslinked starch 1 | 3 (2.6) | Low molecular weight starch 1 | 3 (2.6) | Gouda | 45 | 5 | A | 3 | 4 | 7 | A |
| 6 | Crosslinked starch 1 | 2 (1.8) | Low molecular weight starch 1 | 7 (6.1) | Gouda | 45 | 5 | A | 4 | 4 | 4 | A |
| 7 | Crosslinked starch 1 | 6 (5.3) | Low molecular weight starch 1 | 3 (2.6) | Gouda | 45 | 3 | A | 5 | 4 | 7 | A |
| 8 | Crosslinked starch 1 | 3 (2.6) | Low molecular weight starch 1 | 7 (6.1) | Gouda | 45 | 5 | A | 4 | 4 | 6 | A |

(continued)

| Experimental Section | Crosslinked starch | | Low molecular weight starch | | Cheese | | Workability | Shape retention | Elasticity | Hardness | Smoothness | Total |
|---|---|---|---|---|---|---|---|---|---|---|---|---|
| | Kind | Content (parts)* | Kind | Content (parts)* | Kind | Content (parts)* | | | | | | |
| 9a | Crosslinked starch 1 | 7 (6.1) | Low molecular weight starch 1 | 3 (2.6) | Gouda | 45 | 2 | A | 5 | 4 | 7 | B |
| 10 | Crosslinked starch 1 | 6 (5.3) | Low molecular weight starch 1 | 6 (5.3) | Gouda | 45 | 3 | A | 4 | 5 | 5 | A |
| 11 | Crosslinked starch 1 | 3 (2.6) | Low molecular weight starch 1 | 10 (8.8) | Gouda | 45 | 5 | A | 4 | 5 | 6 | A |
| 12a | Crosslinked starch 1 | 1 (0.9) | Low molecular weight starch 1 | 15 (13.1) | Gouda | 45 | 2 | A | 3 | 5 | 2 | B |
| 13 | Crosslinked starch 1 | 3 (2.6) | Low molecular weight starch 1 | 13 (11.4) | Gouda | 45 | 5 | A | 4 | 6 | 5 | A |
| 14a | Crosslinked starch 1 | 12 (10.5) | Low molecular weight starch 1 | 4 (3.5) | Gouda | 45 | 2 | A | 5 | 6 | 6 | B |
| 15a | Crosslinked starch 1 | 14 (12.3) | Low molecular weight starch 1 | 2 (1.8) | Gouda | 45 | 1 | A | 6 | 6 | 6 | B |

Table 4: Formulation and evaluation result of processed cheese

11

(continued)

| Experimental Section | Crosslinked starch | | Low molecular weight starch | | Cheese | | Workability | Shape retention | Elasticity | Hardness | Smoothness | Total |
|---|---|---|---|---|---|---|---|---|---|---|---|---|
| | Kind | Content (parts)* | Kind | Content (parts)* | Kind | Content (parts)* | | | | | | |
| 16 | Crosslinked starch 1 | 2 (1.8) | Low molecular weight starch 1 | 15 (13.1) | Gouda | 45 | 5 | A | 4 | 5 | 6 | A |
| 17[a] | Crosslinked starch 1 | 9 (7.9) | Low molecular weight starch 1 | 8 (7.0) | Gouda | 45 | 2 | A | 4 | 9 | 6 | B |
| 18 | Crosslinked starch 1 | 2 (1.8) | Low molecular weight starch 1 | 16 (14.0) | Gouda | 45 | 5 | A | 4 | 9 | 3 | A |
| 19 | Crosslinked starch 1 | 2 (1.8) | Low molecular weight starch 1 | 17 (14.9) | Gouda | 45 | 4 | A | 4 | 10 | 3 | A |
| 20 | Crosslinked starch 1 | 6 (5.3) | Low molecular weight starch 1 | 13 (11.4) | Gouda | 45 | 3 | A | 5 | 10 | 5 | A |
| 21 | Crosslinked starch 1 | 3.8 (3.3) | Low molecular weight starch 1 | 16 (14.0) | Gouda | 45 | 5 | A | 5 | 6 | 4 | A |
| 22 | Crosslinked starch 1 | 6 (5.3) | Low molecular weight starch 1 | 16 (14.0) | Gouda | 45 | 3 | A | 5 | 10 | 5 | A |

Table 4: Formulation and evaluation result of processed cheese

(continued)

| Experimental Section | Crosslinked starch | | Low molecular weight starch | | Cheese | | Workability | Shape retention | Elasticity | Hardness | Smoothness | Total |
|---|---|---|---|---|---|---|---|---|---|---|---|---|
| | Kind | Content (parts)* | Kind | Content (parts)* | Kind | Content (parts)* | | | | | | |
| 23[a] | Crosslinked starch 1 | 4.5 (3.9) | Low molecular weight starch 1 | 20 (17.5) | Gouda | 45 | 1 | - | - | - | - | B |
| 24[a] | Crosslinked starch 1 | 7 (6.1) | Low molecular weight starch 1 | 17 (14.9) | Gouda | 45 | 2 | - | - | - | - | B |
| 25[a] | Crosslinked starch 1 | 3 (2.6) | Low molecular weight starch 1 | 26 (22.8) | Gouda | 45 | 1 | - | - | - | - | B |

Table 4: Formulation and evaluation result of processed cheese

*The numerical values in parentheses for the crosslinked starch content and the low molecular weight starch content represent contents (parts) in terms of solid content mass.
[a]Not encompassed by the invention.

From Table 4, it was clarified that, when 1.8% to 5.3% of the crosslinked starch was blended and 2.6% to 14.9% of the low molecular weight starch was blended, the workability in manufacture, shape retention, elasticity, hardness and smoothness scored 3 points or higher, which were good. With respect to Experimental Sections 23 to 25, no trial product could be manufactured by the present method because the viscosity was too high.

Example 2: Manufacture and evaluation of processed cheese (2)

Processed cheeses (Experimental Sections 26 to 43) were manufactured in a similar manner as in Example 1 except that the kinds and contents of the crosslinked starch and the low molecular weight starch were changed as indicated in Table 5.
For the processed cheeses obtained, evaluation was made in a similar manner as in Example 1. The results were as indicated in Table 5.

[Table 5]

| Experimental Section | Crosslinked starch | | Low molecular weight starch | | Cheese | | Workability | Shape retention | Elasticity | Hardness | Smoothness | Total |
|---|---|---|---|---|---|---|---|---|---|---|---|---|
| | Kind | Content (parts)* | Kind | Content (parts)* | Kind | Content (parts)* | | | | | | |
| 1[a] | - | - | - | - | Gouda | 97 | 5 | A | 5 | 5 | 5 | A |

Table 5: Formulation and evaluation result of processed cheese

(continued)

| Table 5: Formulation and evaluation result of processed cheese | | | | | | | | | | | | |
|---|---|---|---|---|---|---|---|---|---|---|---|---|
| Experimental Section | Crosslinked starch | | Low molecular weight starch | | Cheese | | Workability | Shape retention | Elasticity | Hardness | Smoothness | Total |
| | Kind | Content (parts)* | Kind | Content (parts)* | Kind | Content (parts)* | | | | | | |
| 26 | Crosslinked starch 1 | 3 (2.6) | Low molecular weight starch 1 | 13 (11.4) | Gouda | 45 | 5 | A | 4 | 6 | 5 | A |
| 27 | Crosslinked starch 2 | 3 (2.6) | Low molecular weight starch 1 | 13 (11.4) | Gouda | 45 | 5 | A | 4 | 5 | 4 | A |
| 28 | Crosslinked starch 3 | 3 (2.6) | Low molecular weight starch 1 | 13 (11.4) | Gouda | 45 | 5 | A | 4 | 6 | 5 | A |
| 29 | Crosslinked starch 4 | 3 (2.6) | Low molecular weight starch 1 | 13 (11.4) | Gouda | 45 | 5 | A | 3 | 5 | 5 | A |
| 30 | Crosslinked starch 5 | 3 (2.6) | Low molecular weight starch 1 | 13 (11.4) | Gouda | 45 | 5 | A | 3 | 5 | 5 | A |
| 31 | Crosslinked starch 6 | 3 (2.6) | Low molecular weight starch 1 | 13 (11.4) | Gouda | 45 | 5 | A | 3 | 5 | 6 | A |
| 32 | Crosslinked starch 7 | 3 (2.6) | Low molecular weight starch 1 | 13 (11.4) | Gouda | 45 | 5 | A | 3 | 5 | 5 | A |

(continued)

| Table 5: Formulation and evaluation result of processed cheese | | | | | | | | | | | | |
|---|---|---|---|---|---|---|---|---|---|---|---|---|
| Experim ental Section | Crosslinked starch | | Low molecular weight starch | | Cheese | | Workab ility | Shape retent ion | Elasti city | Hard ness | Smooth ness | Tot al |
| | Kind | Cont ent (part s)* | Kind | Cont ent (part s) * | Kin d | Cont ent (part s)* | | | | | | |
| 33a | Crossli nked starch 1 | 3 (2.6) | Low molec ular weigh t starch 2 | 10 (8.8) | Gou da | 45 | 1 | - | - | - | - | B |
| 34a | Crossli nked starch 1 | 3 (2.6) | Low molec ular weigh t starch 3 | 9 (7.9) | Gou da | 45 | 2 | A | 4 | 6 | 5 | B |
| 35a | Crossli nked starch 1 | 3 (2.6) | Low molec ular weigh t starch 4 | 13 (11.4 ) | Gou da | 45 | 3 | A | 3 | 6 | 3 | A |
| 36a | Crossli nked starch 1 | 3 (2.6) | Low molec ular weigh t starch 5 | 13 (11.4 ) | Gou da | 45 | 3 | A | 4 | 6 | 6 | A |
| 37a | Crossli nked starch 1 | 3 (2.6) | Low molec ular weigh t starch 6 | 13 (11.4 ) | Gou da | 45 | 3 | A | 4 | 8 | 6 | A |
| 38a | Crossli nked starch 1 | 3 (2.6) | Low molec ular weigh t starch 7 | 13 (11.4 ) | Gou da | 45 | 3 | A | 3 | 8 | 5 | A |
| 39 | Crossli nked starch 1 | 3 (2.6) | Low molec ular weigh t starch 8 | 13 (11.4 ) | Gou da | 45 | 4 | A | 4 | 6 | 5 | A |

(continued)

| Experimental Section | Crosslinked starch | | Low molecular weight starch | | Cheese | | Workability | Shape retention | Elasticity | Hardness | Smoothness | Total |
|---|---|---|---|---|---|---|---|---|---|---|---|---|
| | Kind | Content (parts)* | Kind | Content (parts)* | Kind | Content (parts)* | | | | | | |
| 40 | Crosslinked starch 1 | 3 (2.6) | Low molecular weight starch 9 | 13 (11.4) | Gouda | 45 | 5 | A | 3 | 8 | 4 | A |
| 41[a] | Crosslinked starch 1 | 3 (2.6) | Low molecular weight starch 10 | 13 (11.4) | Gouda | 45 | 5 | A | 3 | 3 | 1 | B |
| 42[a] | Crosslinked starch 1 | 3 (2.6) | Low molecular weight starch 11 | 13 (11.4) | Gouda | 45 | 5 | A | 3 | 1 | 2 | B |
| 43[a] | Crosslinked starch 1 | 3 (2.6) | Low molecular weight starch 12 | 13 (11.4) | Gouda | 45 | 5 | A | 6 | 3 | 2 | B |

*The numerical values in parentheses for the crosslinked starch content and the low molecular weight starch content represent contents (parts) in terms of solid content mass.
[a]Not encompassed by the invention.

From Table 5, it was clarified that a cheese having good shape retention, elasticity, hardness and smoothness was obtained in both of Experimental Sections 26 to 32 in which the test was conducted using any other crosslinked starch in place of crosslinked starch 1 and Experimental Sections 35 to 40 in which the test was conducted using any other low molecular weight starch having a DE of less than 2 and a paste viscosity at 10% by mass of 300 mPa·s or less in place of low molecular weight starch 1. On the other hand, in the case of Experimental Sections 33 and 34 involving the use of a low molecular weight starch having a paste viscosity of more than 300 mPa·s, the viscosity of the cheese in heating was high, and the workability in manufacture was poor. Especially, with respect to Experimental Section 33, no trial product could be manufactured by the present method because the viscosity was too high. Also, it was clarified that, in Experimental Sections 41 to 43 involving the use of an excessively molecular weight-reduced low molecular weight starch having a DE of 2 or more, the obtained cheeses were soft, gave a rough feel, and were poor in hardness and smoothness.

Example 3: Manufacture and evaluation of processed cheese (3)

The water for dissolving whole milk powder was defined as water (1), and the water added so that the total amount reached 100 parts by mass was defined as water (2), and processed cheeses (Experimental Sections 44 to 48) were manufactured in a similar manner as in Example 1 except that the contents of the crosslinked starch and the low molecular weight starch, the content of the raw material cheese, the content of the molten salt, water (1) and water (2) were changed as indicated in Table 6.

[Table 6]

| Table 6: Formulation of processed cheese | | | | | | |
|---|---|---|---|---|---|---|
| | Experimental Section | 44[a] | 45[a] | 46[a] | 47[a] | 48[a] |
| Ingredient (parts) | Water (1) | 38.8 | 32.8 | 23.3 | 13.2 | 6.9 |
| | Whole milk powder | 5.0 | 5.0 | 5.0 | 5.0 | 5.0 |
| | Crosslinked starch 1 (parts by mass of solid content) | 15.0 (13.1) | 13.0 (11.4) | 13.0 (11.4) | 13.0 (11.4) | 10.0 (8.8) |
| | Low molecular weight starch 1 (parts by mass of solid content) | 6.0 (5.3) | 4.0 (3.5) | 3.0 (2.6) | 3.0 (2.6) | 2.0 (1.8) |
| | Raw material cheese | 25.0 | 35.0 | 45.0 | 55.0 | 65.0 |
| | Molten salt | 1.2 | 1.2 | 1.7 | 1.8 | 2.1 |
| | Water (2) | 9.0 | 9.0 | 9.0 | 9.0 | 9.0 |
| | Total | 100.0 | 100.0 | 100.0 | 100.0 | 100.0 |
| [a]Not encompassed by the invention. | | | | | | |

For the processed cheeses obtained, evaluation was made in a similar manner as in Example 1. The results were as indicated in Table 7.

[Table 7]

| Table 7: Formulation and evaluation result of processed cheese | | | | | | | | | | | | |
|---|---|---|---|---|---|---|---|---|---|---|---|---|
| Experimental Section | Crosslinked starch | | Low molecular weight starch | | Cheese | | Workability | Shape retention | Elasticity | Hardness | Smoothness | Total |
| | Kind | Content (parts)* | Kind | Content (parts)* | Kind | Content (parts)* | | | | | | |
| 1[a] | - | - | - | - | Gouda | 97 | 5 | A | 5 | 5 | 5 | A |
| 44 | Crosslinked starch 1 | 6 (5.3) | Low molecular weight starch 1 | 15 (13.1) | Gouda | 25 | 5 | A | 3 | 5 | 3 | A |
| 45 | Crosslinked starch 1 | 4 (3.5) | Low molecular weight starch 1 | 13 (11.4) | Gouda | 35 | 5 | A | 3 | 4 | 5 | A |
| 46 | Crosslinked starch 1 | 3 (2.6) | Low molecular weight starch 1 | 13 (11.4) | Gouda | 45 | 5 | A | 4 | 6 | 5 | A |

(continued)

| Experimental Section | Crosslinked starch | | Low molecular weight starch | | Cheese | | Workability | Shape retention | Elasticity | Hardness | Smoothness | Total |
|---|---|---|---|---|---|---|---|---|---|---|---|---|
| | Kind | Content (parts)* | Kind | Content (parts)* | Kind | Content (parts)* | | | | | | |
| 47 | Crosslinked starch 1 | 3 (2.6) | Low molecular weight starch 1 | 13 (11.4) | Gouda | 55 | 4 | A | 4 | 6 | 5 | A |
| 48 | Crosslinked starch 1 | 2 (1.8) | Low molecular weight starch 1 | 10 (8.8) | Gouda | 65 | 3 | A | 4 | 8 | 5 | A |

Table 7: Formulation and evaluation result of processed cheese

*The numerical values in parentheses for the crosslinked starch content and the low molecular weight starch content represent contents (parts) in terms of solid content mass.
aNot encompassed by the invention.

From Table 7, it was clarified that the obtained processed cheeses were good in shape retention and texture while the workability in manufacture was good also in a food (a cheese food, a processed cheese, etc.) made from milk as the main raw material and having a small amount of cheese.

Example 4: Manufacture and evaluation of processed cheese (4)

Processed cheeses (Experimental Sections 49 to 51) were manufactured in a similar manner as in Example 1 except that Cheddar cheese was used as the raw material cheese, and that the contents of the crosslinked starch and low molecular weight starch were changed as indicated in Table 8.
For the processed cheeses obtained, evaluation was made in a similar manner as in Example 1. The results were as indicated in Table 8.

[Table 8]

| Experimental Section | Crosslinked starch | | Low molecular weight starch | | Cheese | | Workability | Shape retention | Elasticity | Hardness | Smoothness | Total |
|---|---|---|---|---|---|---|---|---|---|---|---|---|
| | Kind | Content (parts)* | Kind | Content (parts)* | Kind | Content (parts)* | | | | | | |
| 49a | - | - | - | - | Cheddar | 97 | 5 | A | 5 | 5 | 5 | A |
| 50a | Crosslinked starch 1 | 1 (0.9) | Low molecular weight starch 1 | 6 (5.3) | Cheddar | 45 | 5 | A | 2 | 3 | 2 | B |

Table 8: Formulation and evaluation result of processed cheese

(continued)

Table 8: Formulation and evaluation result of processed cheese

| Experim ental Section | Crosslinked starch | | Low molecular weight starch | | Cheese | | Workab ility | Shap e retent ion | Elasti city | Hard ness | Smooth ness | Tot al |
|---|---|---|---|---|---|---|---|---|---|---|---|---|
| | Kind | Cont ent (part s)* | Kind | Cont ent (part s)* | Kind | Cont ent (part s)* | | | | | | |
| 51 | Crossli nked starch 1 | 3 (2.6) | Low molec ular weigh t starch 1 | 7 (6.1) | Ched dar | 45 | 5 | A | 5 | 4 | 5 | A |
| *The numerical values in parentheses for the crosslinked starch content and the low molecular weight starch content represent contents (parts) in terms of solid content mass. aNot encompassed by the invention. | | | | | | | | | | | | |

From Table 8, it was clarified that Experimental Section 51 in which 1.8% to 5.3% of the crosslinked starch and 2.6% to 14.9% of the low molecular weight starch having a DE of less than 2 and a paste viscosity at 10% by mass of 300 mPa·s or less were blended in the cheese raw material provided a processed cheese having good shape retention and texture while having good workability in manufacture also when Cheddar cheese was used. On the other hand, Experimental Section 50 with a low proportion of the crosslinked starch presented bad results, especially, in terms of elasticity and smoothness.

Example 5: Manufacture and evaluation of processed cheese (5)

Processed cheeses (Experimental Sections 52 to 57) were manufactured in a similar manner as in Example 1 except that cream cheese was used as the raw material cheese, and that the amounts of the crosslinked starch and low molecular weight starch added were changed.

For the processed cheeses obtained, evaluation was made in a similar manner as in Example 1. The results were as indicated in Table 9.

[Table 9]

Table 9: Formulation and evaluation result of processed cheese

| Experim ental Section | Crosslinked starch | | Low molecular weight starch | | Cheese | | Workab ility | Shape retent ion | Elasti city | Hard ness | Smooth ness | Tot al |
|---|---|---|---|---|---|---|---|---|---|---|---|---|
| | Kind | Cont ent (part s)* | Kind | Cont ent (part s) * | Kin d | Cont ent (part s)* | | | | | | |
| 52a | - | - | - | - | Cre am | 97 | 5 | A | 5 | 5 | 5 | A |
| 53 | Crossli nked starch 1 | 3 (2.6) | Low molec ular weigh t starch 1 | 10 (8.8) | Cre am | 45 | 5 | A | 4 | 6 | 4 | A |

(continued)

| Experimental Section | Crosslinked starch | | Low molecular weight starch | | Cheese | | Workability | Shape retention | Elasticity | Hardness | Smoothness | Total |
|---|---|---|---|---|---|---|---|---|---|---|---|---|
| | Kind | Content (parts)* | Kind | Content (parts)* | Kind | Content (parts)* | | | | | | |
| 54 | Crosslinked starch 1 | 3 (2.6) | Low molecular weight starch 1 | 12 (10.5) | Cream | 45 | 5 | A | 3 | 6 | 4 | A |
| 55[a] | Crosslinked starch 1 | 1 (0.9) | Low molecular weight starch 1 | 16 (14.0) | Cream | 45 | 2 | A | 4 | 6 | 4 | B |
| 56 | Crosslinked starch 1 | 2 (1.8) | Low molecular weight starch 1 | 15 (13.1) | Cream | 45 | 3 | A | 3 | 6 | 4 | A |
| 57 | Crosslinked starch 1 | 6 (5.3) | Low molecular weight starch 1 | 13 (11.4) | Cream | 45 | 5 | A | 5 | 8 | 4 | A |

Table 9: Formulation and evaluation result of processed cheese

*The numerical values in parentheses for the crosslinked starch content and the low molecular weight starch content represent contents (parts) in terms of solid content mass.
[a]Not encompassed by the invention.

From Table 9, it was clarified that Experimental Sections 53, 54, 56 and 57 in which 1.8% to 5.3% of the crosslinked starch and 2.6% to 14.9% of the low molecular weight starch having a DE of less than 2 and a paste viscosity at 10% by mass of 300 mPa·s or less were blended in the cheese raw material provided a processed cheese having good shape retention and texture while having good workability in manufacture also when cream cheese was used. On the other hand, Experimental Section 55 with a low proportion of the crosslinked starch presented bad results, especially, in terms of workability in manufacture.

## Claims

1.   A method for manufacturing a processed cheese in which a raw material natural cheese has partially been substituted by other food materials, which comprises blending at least a crosslinked starch and a low molecular weight starch as the other food materials, wherein the low molecular weight starch has a DE of less than 2 and a paste viscosity at 10% by mass of 300 mPa·s or less, wherein the blending ratio of the crosslinked starch to the total raw material ranges from 1.8% to 5.3% by mass, wherein the blending ratio of the low molecular weight starch to the total raw material ranges from 2.6% to 14.9% by mass, wherein the low molecular weight starch is an oxidized waxy corn starch or oxidized tapioca starch, and wherein the DE and the paste viscosity at 10% by mass are measured by the methods defined in the description.

**2.** The method according to claim 1, which further comprises a heating and stirring step after the blending of the crosslinked starch and the low molecular weight starch.

**3.** The method according to claim 1 or 2, wherein the blending ratio of the low molecular weight starch to the total raw material ranges from 5.3% to 14.9% by mass.

**4.** The method according to any one of claims 1 to 3, wherein the crosslinked starch has a heat swelling degree ranging from 7.0 times to 70.0 times, as measured by the method defined in the description.

**5.** The method according to any one of claims 1 to 4, wherein said method is used for suppressing the deterioration in shape retention and/or texture of said processed cheese.

## Patentansprüche

**1.** Verfahren zur Herstellung eines Schmelzkäses, bei dem ein natürlicher Käse als Rohmaterial teilweise durch andere Lebensmittelzutaten ersetzt wurde, umfassend das Mischen von mindestens einer vernetzten Stärke und einer Stärke mit einem niedrigerem Molekulargewicht als die anderen Lebensmittelzutaten, wobei die Stärke mit niedrigem Molekulargewicht einen DE-Wert von weniger als 2 und eine Pastenviskosität bei 10 Massenprozent von 300 mPa·s oder weniger aufweist, wobei das Mischungsverhältnis der vernetzten Stärke zum gesamten Rohmaterial im Bereich von 1,8 Massenprozent bis 5,3 Massenprozent ist, wobei das Mischungsverhältnis der Stärke mit niedrigem Molekulargewicht zum gesamten Rohmaterial von 2,6 Massenprozent bis 14,9 Massenprozent, wobei die niedermolekulare Stärke eine oxidierte Wachsmaisstärke oder oxidierte Tapiokastärke ist und wobei die DE und die Pastenviskosität bei 10 Massenprozent nach den in der Beschreibung definierten Verfahren gemessen werden.

**2.** Verfahren nach Anspruch 1, das ferner einen Erhitzungs- und Rührschritt nach dem Mischen der vernetzten Stärke und der Stärke mit niedrigem Molekulargewicht umfasst.

**3.** Verfahren nach Anspruch 1 oder 2, wobei das Mischungsverhältnis der Stärke mit niedrigem Molekulargewicht zum gesamten Rohmaterial von 5,3 Massenprozent bis 14,9 Massenprozent liegt.

**4.** Verfahren nach einem der Ansprüche 1 bis 3, wobei die vernetzte Stärke einen Wärmeschwellungsgrad im Bereich von 7,0- bis 70,0-fach aufweist, gemessen nach das in der Beschreibung definierte Verfahren.

**5.** Verfahren nach einem der Ansprüche 1 bis 4, wobei das Verfahren zur Unterdrückung der Verschlechterung der Formbeständigkeit und/oder Textur des Schmelzkäses verwendet wird.

## Revendications

**1.** Procédé de fabrication d'un fromage transformé dans lequel une matière première de fromage naturel a été partiellement substituée par d'autres matières alimentaires, qui comprend le mélange d'au moins un amidon réticulé et un amidon de faible poids moléculaire en tant qu'autres matières alimentaires, dans lequel l'amidon de faible poids moléculaire présente un DE inférieur à 2 et une viscosité de pâte à 10 % en masse de 300 mPa·s ou moins, dans lequel le rapport de mélange de l'amidon réticulé à la matière première totale va de 1,8 % à 5,3 % en masse, dans lequel le rapport de mélange de l'amidon de faible poids moléculaire à la matière première totale va de 2,6 % à 14,9 % en masse, dans lequel l'amidon de faible poids moléculaire est un amidon de maïs cireux oxydé ou un amidon de tapioca oxydé, et dans lequel le DE et la viscosité de pâte à 10 % en masse sont mesurés par les procédés définis dans la description.

**2.** Procédé selon la revendication 1, qui comprend en outre une étape de chauffage et d'agitation après le mélange de l'amidon réticulé et de l'amidon de faible poids moléculaire.

**3.** Procédé selon la revendication 1 ou 2, dans lequel le rapport de mélange de l'amidon de faible poids moléculaire à la matière première totale va de 5,3 % à 14,9 % en masse.

**4.** Procédé selon l'une quelconque des revendications 1 à 3, dans lequel l'amidon réticulé présente un degré de gonflement à la chaleur allant de 7,0 fois à 70,0 fois, tel que mesuré par le procédé défini dans la description.

**5.** Procédé selon l'une quelconque des revendications 1 à 4, dans lequel ledit procédé est utilisé pour supprimer la détérioration de la rétention de forme et/ou de la texture dudit fromage transformé.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012005435 A
- JP H6153791 A
- US 2009061065 A1

**Non-patent literature cited in the description**

- Milk and Milk Products. Ministry of Health and Welfare Ordinance No. 52. 27 December 1951